# EUROPEAN PATENT APPLICATION

(11) **EP 4 317 869 A1**
(43) Date of publication of application: **07.02.2024**
(21) Application number: 22780161.0
(22) Date of filing: 17.03.2022
(51) Int. Cl.: F25D 23/00, A23B 7/144, A23L 3/3409, F25D 11/00

(54) **STOREHOUSE, METHOD, AND SERVER**

(30) Priority: 31.03.2021 JP 2021059426
(71) Applicant: Daikin Industries, Ltd., Osaka-shi, Osaka 530-0001 (JP)
(72) Inventor: MATSUI, Hidenori, Osaka-shi, Osaka 530-8323 (JP); SATO, Kiichiro, Osaka-shi, Osaka 530-8323 (JP); MUKAIDANI, Toshiaki, Osaka-shi, Osaka 530-8323 (JP); YAMAUCHI, Junko, Osaka-shi, Osaka 530-8323 (JP); INOUE, Hiroko, Osaka-shi, Osaka 530-8323 (JP); KATADA, Chiharu, Osaka-shi, Osaka 530-8323 (JP)
(74) Representative: Hoffmann Eitle
(86) International application number: PCT/JP2022/012197
(87) International publication number: WO 2022/209941

(57) **Abstract**

The eating timing of food/drink in a storage is adjusted according to the request of a receiver who receives the food/drink in the storage. A storage according to an embodiment of the present disclosure includes a control unit; and an actuator configured to adjust an environment based on an instruction from the control unit, wherein the control unit acquires information relating to food/drink in the storage and a specified date, and gives the instruction to the actuator regarding a control target value of a storage environment of the food/drink, based on the information relating to the food/drink and the specified date.

## Description

### [Technical Field]

This disclosure relates to a storage, a method, and a server.

### [Background Art]

Conventionally, a system for controlling the environment in a storage such as a container is known. For example, in Patent Document 1, the temperature, the humidity, the oxygen concentration, and the carbon dioxide concentration of the air in the storage are adjusted based on the state of fresh products such as fruits and vegetables stored in a container for shipping.

### [Citation List]

### [Patent Document]

(Patent document 1) Japanese Unexamined Patent Application Publication No. 2020-008200

### [Summary of Invention]

### [Technical Problem]

However, in the conventional method, the environment in the storage is merely made close to an environment suitable for the storage object, and the state of food/drink in the storage cannot be adjusted according to various requests.

An object of the present disclosure is to adjust the eating timing of food/drink in the storage according to the request of the receiver who receives the food/drink in the storage.

A storage according to the first aspect of the present disclosure includes
a control unit; and
an actuator configured to adjust an environment based on an instruction from the control unit, wherein
the control unit
   acquires information relating to food/drink in the storage and a specified date, and
   gives the instruction to the actuator regarding a control target value of a storage environment of the food/drink, based on the information relating to the food/drink and the specified date.

According to the first aspect of the present disclosure, the receiver can receive the food/drink for which the eating timing has been adjusted according to the request of the receiver.

The storage according to the second aspect of the present disclosure is the storage according to the first aspect, wherein
the specified date is a take-out date of taking out the food/drink from the storage, and
the control unit determines the control target value of the storage environment of the food/drink such that the food/drink reaches an eating timing on the take-out date.

According to the second aspect of the present disclosure, the receiver can receive the food/drink that has reached the eating timing on a specified take-out date.

The storage according to the third aspect of the present disclosure is the storage according to the first aspect, wherein
the specified date is a take-out date of taking out the food/drink from the storage, and
the control unit determines the control target value of the storage environment of the food/drink such that the food/drink reaches an eating timing a predetermined number of days after the take-out date.

According to a third aspect of the present disclosure, the receiver can receive the food/drink on a specified take-out date and eat/drink the food/drink that has reached the eating timing a predetermined number of days after the take-out date.

The storage according to the fourth aspect of the present disclosure is the storage according to the first aspect, wherein
the specified date is a take-out date of taking out the food/drink from the storage and an eating/drinking date of eating/drinking the food/drink, and
the control unit determines the control target value of the storage environment of the food/drink such that the food/drink reaches an eating timing on the eating/drinking date.

According to a fourth aspect of the present disclosure, the receiver can receive the food/drink on a specified take-out date and eat/drink the food/drink that has reached the eating timing on the specified date of consumption.

The storage according to the fifth aspect of the present disclosure is the storage according to the first aspect, wherein
the specified date is an eating/drinking date of eating/drinking the food/drink, and
the control unit specifies a take-out date of taking out the food/drink from the storage, and determines the control target value of the storage environment of the food/drink such that the food/drink reaches an eating timing on the eating/drinking date.

According to the fifth aspect of the present disclosure, the receiver can eat/drink food/drink that has reached the eating timing on a specified eating/drinking day.

The storage according to the sixth aspect of the present disclosure is the storage according to any one of the third to fifth aspects, wherein the control unit presents a storage method of storing the food/drink from the take-out date to the eating/drinking date.

According to the sixth aspect of the present disclosure, the receiver can know the storage method of storing the food/drink from the time of taking out the food/drink to eating/drinking the food/drink.

The storage according to the seventh aspect of the present disclosure is the storage according to any one of the first to sixth aspects, wherein the control unit determines whether the specified food/drink in the storage has reached an eating timing.

According to a seventh aspect of the present disclosure, the receiver can know whether there is food/drink that has reached the eating timing in the storage.

The storage according to the eighth aspect of the present disclosure is the storage according to the seventh aspect, wherein
the control unit
conveys the food/drink to an outlet of the storage when the food/drink has reached the eating timing, and
acquires the specified date when the food/drink has not reached the eating timing, and determines the control target value of the storage environment of the food/drink based on the food/drink and the specified date.

According to the eighth aspect of the present disclosure, the receiver can immediately receive the food/drink that has reached the eating timing, or can later receive the food/drink for which the eating timing has been adjusted according to the request of the receiver later.

The storage according to the ninth aspect of the present disclosure is the storage according to any one of the first to eighth aspects, wherein the storage is a mobile food/drink storage with an automatic convey device.

According to a ninth aspect of the present disclosure, the receiver can receive food/drink automatically conveyed in a mobile storage.

The storage according to the tenth aspect of the present disclosure is the storage according to any one of the first to ninth aspects, wherein a condition of the storage environment is a condition relating to gas inside the storage.

According to the tenth aspect of the present disclosure, the receiver can receive food/drink for which the eating timing has been adjusted by the gas in the storage.

The storage according to the eleventh aspect of the present disclosure is the storage according to the tenth aspect, wherein the gas inside the storage includes any one of ethylene, acetylene, or propylene.

In accordance with the eleventh aspect of the present disclosure, the receiver can receive food/drink for which the eating timing is adjusted by ethylene, acetylene, or propylene.

The storage according to the twelfth aspect of the present disclosure is the storage according to any one of the first to ninth aspects, wherein a condition of the storage environment is a condition relating to temperature adjustment for any one of force-ripening the food/drink, thawing the food/drink, or warming the food/drink.

According to a twelfth aspect of the present disclosure, the receiver may receive food/drink that has been force-ripened and has reached the eating timing, food/drink that has been thawed and has reached the eating timing, or food/drink that has been warmed and has reached the eating timing.

A method according to the thirteenth aspect of the present disclosure is executed by a control unit of a storage, the storage including an actuator configured to adjust an environment based on an instruction from the control unit, the method including
a step of acquiring information relating to food/drink in the storage and a specified date; and
a step of giving the instruction to the actuator regarding a control target value of a storage environment of the food/drink, based on the information relating to the food/drink and the specified date.

A server according to the fourteenth aspect of the present disclosure is configured to control a storage including an actuator, wherein
a control unit of the server
acquires information relating to food/drink in the storage and a specified date, and
gives an instruction to the actuator regarding a control target value of a storage environment of the food/drink, based on the information relating to the food/drink and the specified date.

### [Brief Description of Drawings]

[FIG. 1] FIG. 1 is an overall diagram of the present disclosure.
[FIG. 2] FIG. 2 is a control example of the storage of the present disclosure.
[FIG. 3] FIG. 3 is a hardware configuration diagram of the storage according to an embodiment of the present disclosure.
[FIG. 4] FIG. 4 is a hardware configuration diagram of the storage according to an embodiment of the present disclosure.
[FIG. 5] FIG. 5 is a hardware configuration diagram of the server according to an embodiment of the present disclosure.
[FIG. 6] FIG. 6 is a flowchart of a process of adjusting the eating timing according to an embodiment of the present disclosure.
[FIG. 7] FIG. 7 is a flowchart of the process of determining the eating timing according to an embodiment of the present disclosure.
[FIG. 8] FIG. 8 is a diagram for explaining the specified date according to an embodiment of the present disclosure.

### [Description of Embodiments]

Embodiments of the present disclosure will be described below based on the drawings.

### <Explanation of terminology>

- "Food/drink" is any food/drink stored in the storage. For example, food/drink includes fruits and vegetables, meat and seafood, and processed foods such as packaged lunches.
- "Eating timing" is the appropriate time to eat/drink the food/drink. For example, the eating timing is when fruits and vegetables are ripe, frozen meat and seafood are thawed, and packaged lunches are warmed.
- "Environment" is the state of the storage. For example, the environment is the temperature, the composition of air, etc.

### <Overall configuration>

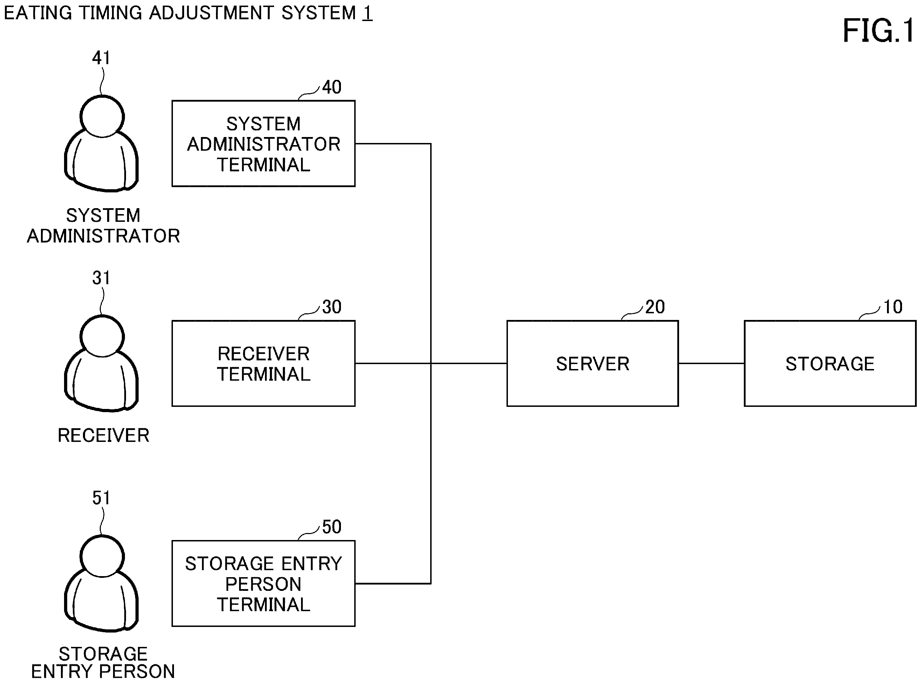

FIG. 1 is an overall configuration diagram of the present disclosure. An eating timing adjustment system 1 includes a storage 10, a server 20, a receiver terminal 30, a system administrator terminal 40, and a storage entry person terminal 50. The storage 10 can transmit and receive data with the server 20 through any network. The receiver terminal 30, the system administrator terminal 40, and the storage entry person terminal 50 can transmit and receive data with the server 20 through any network. Each of these elements will be described below.

As an example, a case in which a receiver 31 (for example, a person who purchases food/drink, etc.) receives the food/drink stored in the storage by a storage entry person 51 (for example, a person who sells food/drink, a person who delivers food/drink, etc.) at an unmanned receiving window of the storage 10 will be described.

The storage 10 adjusts the eating timing of food/drink stored in the storage. Specifically, the storage 10 can adjust the eating timing of food/drink based on a specified date (for example, the day on which food/drink is taken out of the storage 10, the day on which food/drink is eaten or drank, etc., see below for details). For example, the storage 10 is a mobile food/drink storage with an automatic convey device. The storage 10 may include a function to adjust the temperature in the storage (a refrigeration device 110 to be described later) and a function to adjust the air composition in the storage (an air composition adjustment device 120 to be described later).

The server 20 manages a specified date (for example, the day on which food/drink is taken out of the storage 10, the day on which food/drink is eaten or drank, etc.).

The receiver terminal 30 is a terminal operated by the receiver 31. Specifically, the receiver 31 operates the receiver terminal 30 to transmit, to the server 20, the information of the desired specified date (for example, the day on which food/drink is taken out of the storage 10, the day on which food/drink is eaten or drank, etc.). For example, the receiver terminal 30 is a computer such as a smartphone, a tablet, a personal computer, or the like.

The system administrator terminal 40 is a terminal operated by a system administrator 41. Specifically, the system administrator 41 operates the system administrator terminal 40 to manage the server 20. For example, the system administrator terminal 40 is a computer such as a smartphone, a tablet, a personal computer, or the like.

The storage entry person terminal 50 is a terminal operated by the storage entry person 51. Specifically, the storage entry person 51 operates the storage entry person terminal 50 to transmit, to the server 20, information about the food/drink that has been stored (for example, the type of food/drink, the quantity, the information on the eating timing, etc.). For example, the storage entry person terminal 50 is a computer such as a smartphone, a tablet, a personal computer, or the like.

### <Food/drink information>

The information managed by the eating timing adjustment system 1 will now be described. The storage 10 or the server 20 (alternatively, both the storage 10 and the server 20) manages information on food/drink stored in each storage 10.

For example, information on food/drink may include the following information:
- Type of food/drink (for example, the type specified by the storage entry person 51. For example, the type of fruit or vegetable, the type of meat or seafood, the type of processed food, etc.)
- Specified date for food/drink (for example, the date on which food/drink is taken out of the storage 10, the date on which food/drink is eaten or drank, etc.)
- Amount of food/drink (for example, the weight)
- Eating timing of food/drink (for example, the state of the eating timing (the degree of ripeness, the temperature, etc.))
- State of food/drink (for example, the current temperature of the food/drink, whether the eating timing is reached (for example, the state of food/drink in the storage detected by the sensor 150), and the number of days until the eating timing input by the administrator, etc. (in the case of fruit, the eating timing in the initial state is managed as "x days from present"; by controlling the ripening speed, the eating timing is shortened by y days to be in time for the specified date, and, therefore, the eating timing is changed to "x-y days later"))
- Storage state of food/drink (for example, the temperature of refrigeration or the temperature of freezing)

Note that the storage 10 may manage the type, the quantity, the eating timing, the state, and the storage state of the food/drink, and the server 20 may manage the specified date of the food/drink.

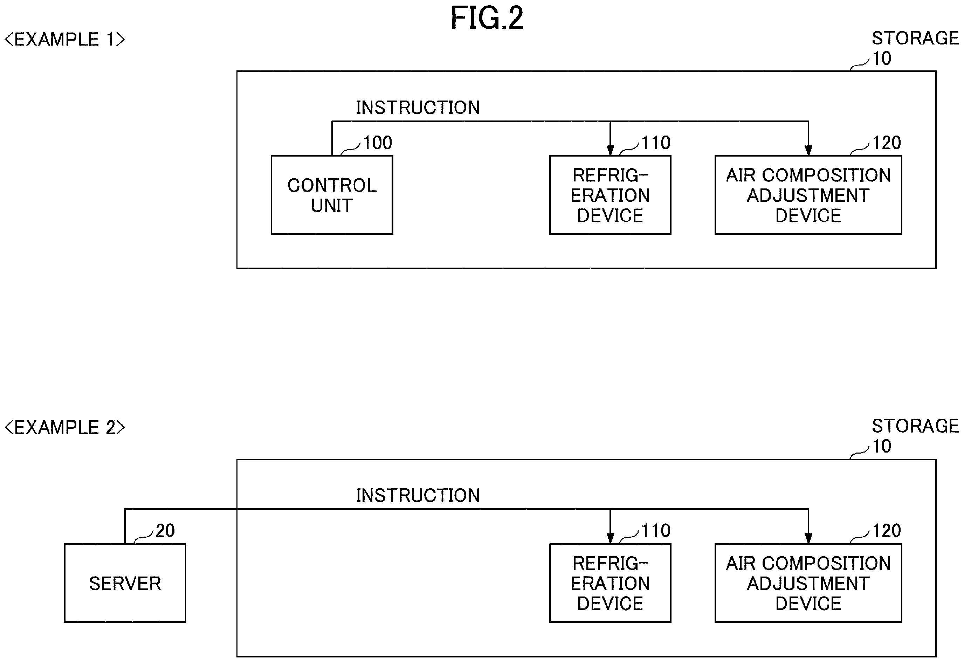

FIG. 2 is a control example of the storage 10 of the present disclosure.

In example 1, a control unit (processor) 100 of the storage 10 can control the actuator of the storage 10 (Specifically, the refrigeration device 110 of the storage 10, the air composition adjustment device 120 of the storage 10, and the like.). In the present specification, example 1 will mainly be described.

In example 2, the server 20 can control the actuator of the storage 10 (Specifically, the refrigeration device 110 of the storage 10, the air composition adjustment device 120 of the storage 10, and the like.). That is, the processing executed by the control unit 100 of the storage 10 described herein can be executed by the server 20.

### <Hardware configuration of storage>

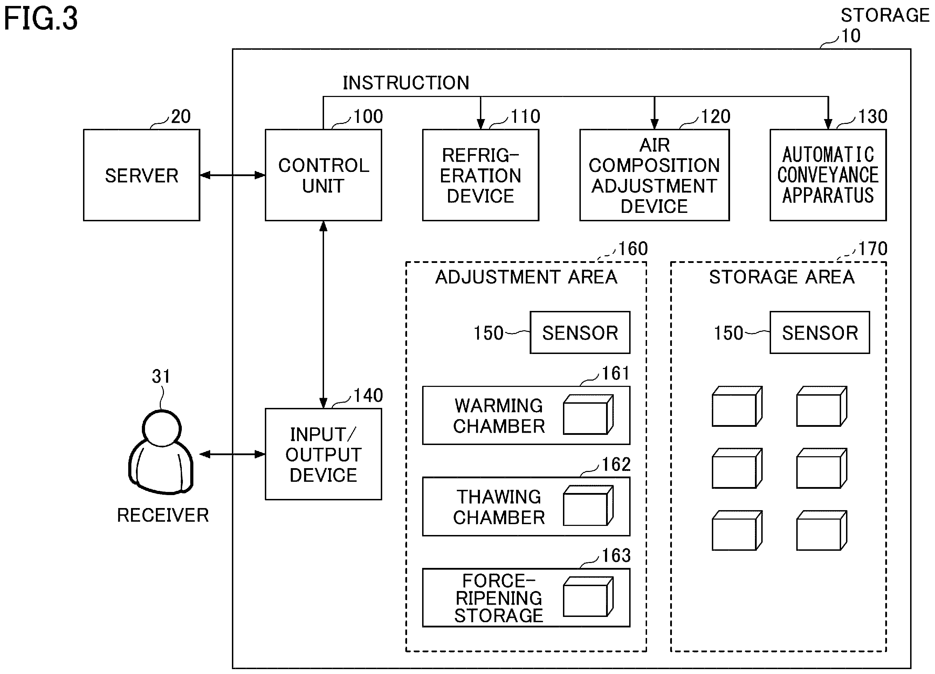

FIG. 3 is a hardware configuration diagram of the storage 10 according to an embodiment of the present disclosure. The storage 10 may have inside a storage area (a refrigeration area and a freezing area) for maintaining the freshness of food/drink, and an adjustment area 160 for adjusting the eating timing of food/drink.

The storage 10 includes the control unit 100, the refrigeration device 110, the air composition adjustment device 120, an automatic conveyance device 130, an input/output device 140, a sensor 150, a warming chamber 161, a thawing chamber 162, and an force-ripening storage 163. Each of these elements will be described below.

The control unit 100 will be described by dividing the description into <adjustment of eating timing of food/drink> and <determination of eating timing of food/drink>.

### <Adjustment of eating timing of food/drink>

The control unit 100 acquires information on food/drink in the storage 10 and the specified date. For example, a control unit 100 acquires information on food/drink and the specified date from the server 20. For example, information on food/drink is information on the type of food/drink.

The control unit 100 creates an eating timing adjustment start schedule (the schedule of when to start adjusting the eating timing) based on information on the food/drink and the specified date, and determines a control target value of the storage environment of the food/drink. For example, the control unit 100 identifies the type and amount of food/drink, the current state of food/drink, and the storage state (for example, type and quantity of food/drink: one kilogram of melon, the current state and the storage state of food/drink: unripe, refrigerated at xx degrees) by referring to information on food/drink managed by the storage 10 or the server 20, and determines a control target value (how to warm, thaw, and ripen (an adjustment method and a target value, e.g., the amount of ethylene, refrigeration at ×× degrees)) of the storage environment necessary to reach the eating timing of the food/drink. Specifically, the control unit 100 can control the speed of fruit ripening by the temperature (because the amount of ethylene (a ripening hormone) produced in the fruit is affected by temperature).

The control target value of the storage environment of food/drink will now be described. The control target value of the storage environment of food/drink is the target value (for example, a target value such as the temperature in the storage and the composition of air in the storage) when controlling the storage environment (specifically, the environment in the warming chamber 161, the thawing chamber 162, and the force-ripening storage 163) so that the eating timing of the food/drink is reached at a predetermined time (for example, the eating timing is reached on the specified date, or the eating timing is reached a predetermined number of days after the specified date). For example, the condition of the storage environment is the condition related to gas in the storage (for example, including any one of ethylene, acetylene, or propylene). For example, the condition of the storage environment is the condition related to the temperature adjustment for any one of force-ripening food/drink, thawing food/drink, or warming food/drink.

Note that typical foods for which the force-ripening is controlled with ethylene are melon, kiwifruit, pear, and banana. Further, a typical food for which the force-ripening is controlled with acetylene is mango. Further, a typical food for which the force-ripening is controlled with propylene is peach.

The control unit 100 gives an instruction to the actuator (specifically, the refrigeration device 110 and the air composition adjustment device 120) regarding the control target value of the storage environment of the food/drink.

### <Determination of eating timing of food/drink>

The control unit 100 receives a specification of food/drink. Specifically, the control unit 100 receives a specification of food/drink from the input/output device 140 of the storage 10 or the server 20.

For example, the receiver 31 operates the input/output device 140 of the storage 10 to input the desired food/drink. The control unit 100 receives the specification of the desired food/drink of the receiver 31 from the input/output device 140.

For example, the receiver 31 operates the receiver terminal 30 to transmit the desired food/drink to the server 20. The control unit 100 receives the specification of the desired food/drink of the receiver 31 from the server 20.

The control unit 100 determines whether the specified food/drink in the storage 10 has reached the eating timing. Specifically, the control unit 100 determines whether the food/drink has reached the eating timing by referring to information on the food/drink managed by the storage 10 or the server 20.

When the food/drink has reached the eating timing, the control unit 100 conveys the food/drink to the outlet of the storage 10. Specifically, the control unit 100 instructs the automatic conveyance device 130 to convey the food/drink to the outlet of the storage 10. When the eating timing of the food/drink is not reached, the control unit 100 conveys the food/drink to the warming chamber 161, the thawing chamber 162, or the force-ripening storage 163. Specifically, the control unit 100 instructs the automatic conveyance device 130 to convey the food/drink to a place corresponding to the adjustment of the food/drink (that is, any one of the warming chamber 161, the thawing chamber 162, or the force-ripening storage 163).

The refrigeration device 110 adjusts the temperature inside the storage in response to the instruction from the control unit 100. Specifically, the refrigeration device 110 adjusts the temperature inside the warming chamber 161, the thawing chamber 162, and the force-ripening storage 163 in accordance with the control target value of the storage environment of the food/drink instructed by the control unit 100.

The air composition adjustment device 120 adjusts the air composition in the storage in response to an instruction from the control unit 100. Specifically, the air composition adjustment device 120 adjusts the air composition in the warming chamber 161, the thawing chamber 162, and the force-ripening storage 163 in accordance with the control target value of the storage environment of the food/drink instructed by the control unit 100.

The automatic conveyance device 130 conveys the food/drink in the storage in response to the instruction from the control unit 100. Specifically, the automatic conveyance device 130 conveys the stored food/drink from the storage area 170 to the inside of the warming chamber 161 or the inside of the thawing chamber 162 or the inside of the force-ripening storage 163 or the outlet of the adjustment area 160. The automatic conveyance device 130 conveys the food/drink for which the eating timing is adjusted, from the inside of the warming chamber 161 or the inside of the thawing chamber 162 or the inside of the force-ripening storage 163 of the adjustment area 160, to the outlet.

The input/output device 140 is a device that outputs (for example, displays) information to the receiver 31 or the like. For example, the input/output device 140 is a monitor provided with an input means. The input/output device 140 can read a QR code (registered trademark) attached to the food/drink and a QR code displayed on the receiver terminal 30 or the storage entry person terminal 50, to acquire information about the food/drink.

The sensor 150 detects the state of the food/drink in the storage. For example, the sensor 150 detects the components related to ripening emitted by the food/drink (for example, fruits and vegetables).

The warming chamber 161 warms the food/drink (for example, the food/drink (packaged lunches, etc.) that the receiver 31 wishes to warm) so that the eating timing of the food/drink is reached (for example, warmed to a temperature suitable for eating/drinking).

The thawing chamber 162 thaws the food/drink (for example, frozen meat or seafood) so that the eating timing of the food/drink is reached (for example, in a thawed state) .

The force-ripening storage 163 force-ripens food/drink (for example, fruits and vegetables) so that the eating timing of the food/drink is reached (brought to a ripe state, for example, a sweetness or a softness of pulp suitable for eating).

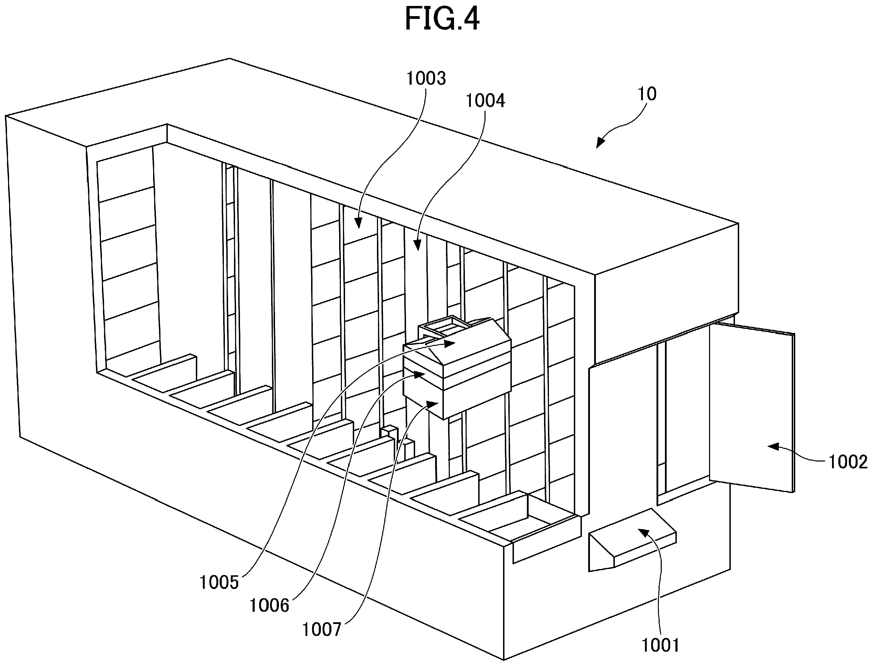

Hereinafter, the storage 10 will be described in more detail with reference to FIG. 4. FIG. 4 is a hardware configuration diagram (an example of the exterior and the interior) of the storage 10 according to an embodiment of the present disclosure. The storage 10 includes a console 1001, a cargo compartment door 1002, a shelf 1003, an automatic conveyance device mast 1004, an automatic conveyance device loader 1005, a carrier box frame 1006, and a food carrier box 1007. Each of these elements will be described below.

The console 1001 is an unattended receiving window. For example, the input/output device 140 is installed in the console 1001.

The cargo compartment door 1002 is a door of the outlet for the receiver 31 to take out food/drink.

The shelf 1003 is a shelf on which the food carrier box 1007 containing food/drink is placed.

The automatic conveyance device mast 1004 lifts and lowers the food carrier box 1007.

The automatic conveyance device loader 1005 holds the food carrier box 1007.

The carrier box frame 1006 is a frame for application to various sizes of the food carrier box 1007.

The food carrier box 1007 is a box in which food/drink is placed.

### <Hardware configuration of server>

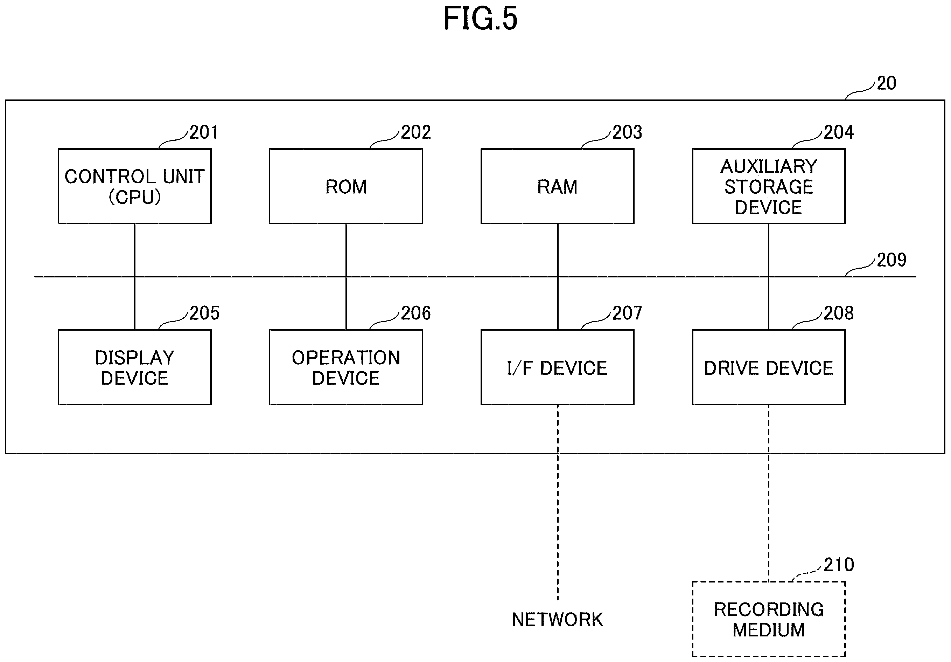

FIG. 5 is a hardware configuration diagram of the server 20 according to an embodiment of the present disclosure.

The server 20 includes a control unit (CPU (Central Processing Unit)) 201, a ROM (Read Only Memory) 202, and a RAM (Random Access Memory) 203. The CPU 201, the ROM 202, and the RAM 203 form a what is referred to as a computer.

The server 20 may also include an auxiliary storage device 204, a display device 205, an operation device 206, and an I/F (Interface) device 207. The pieces of hardware of the server 20 are connected to each other via a bus 209.

The CPU 201 is a computing device for executing various programs installed in the auxiliary storage device 204.

The ROM 202 is a nonvolatile memory. The ROM 202 functions as a main storage device for storing various programs, data, etc., necessary for the CPU 201 to execute various programs installed in the auxiliary storage device 204. Specifically, the ROM 202 functions as a main storage device for storing a boot program such as BIOS (Basic Input/Output System) and EFI (Extensible Firmware Interface).

The RAM 203 is a volatile memory such as DRAM (Dynamic Random Access Memory) and SRAM (Static Random Access Memory). The RAM 203 functions as a main storage device that provides a work area that is expanded when various programs installed in the auxiliary storage device 204 are executed by the CPU 201.

The auxiliary storage device 204 is an auxiliary storage device that stores various programs and information used when various programs are executed.

The display device 205 is a display device for displaying the internal state or the like of the server 20.

The operation device 206 is an input device for the administrator of the server 20 to input various instructions to the server 20.

The I/F device 207 is a communication device for connecting to various sensors and networks and communicating with the storage 10, the receiver terminal 30, the system administrator terminal 40, and the storage entry person terminal 50.

### <Method>

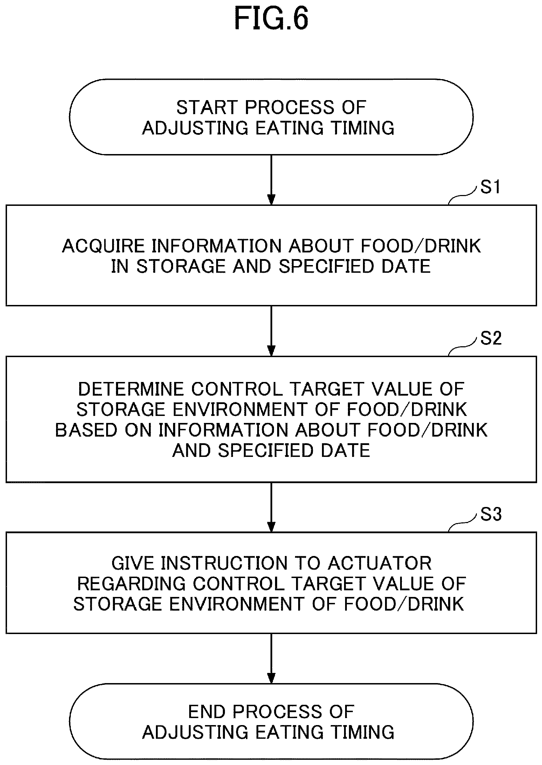

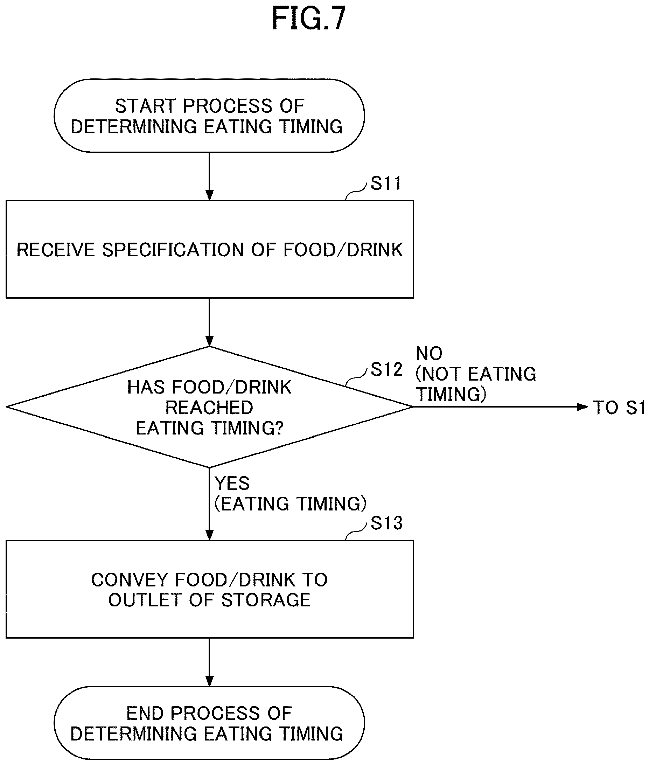

The process for the adjusting the eating timing will be described with reference to FIG. 6, and the process for determining the eating timing will be described with reference to FIG. 7.

FIG. 6 is a flowchart of a process for adjusting the eating timing according to an embodiment of the present disclosure. Although the case where the control unit 100 of the storage 10 executes the process will be described, the control unit (CPU) 201 of the server 20 may execute the process.

In step 1 (S1), the control unit 100 of the storage 10 acquires information about food/drink in the storage 10 and a specified date. For example, the control unit 100 of the storage 10 acquires information about food/drink and a specified date from the server 20. For example, information about food/drink is information about the type of food/drink.

In step 2 (S2), the control unit 100 of the storage 10 determines the control target value of the storage environment of the food/drink based on the information about the food/drink acquired in S1 and the specified date. For example, the conditions of the storage environment are those related to the gas in the storage unit (include, for example, any one of ethylene, acetylene, or propylene). For example, the conditions of the storage environment are those related to the temperature adjustment for any of the force-ripening of food/drink, the thawing of food/drink, or the warming of food/drink.

In step 3 (S3), the control unit 100 of the storage 10 gives an instruction to the actuator (specifically, the refrigeration device 110 and the air composition adjustment device 120) regarding the control target value of the storage environment of the food/drink determined in S2.

FIG. 7 is a flowchart of a process for determining the eating timing according to an embodiment of the present disclosure. Although the case where the control unit 100 of the storage 10 executes the process will be described, the control unit (CPU) 201 of the server 20 may execute the process.

In step 11 (S11), the control unit 100 of the storage 10 receives the specification of food/drink. Specifically, the control unit 100 of the storage 10 receives the specification of food/drink from the input/output device 140 of the storage 10 or the server 20.

For example, the receiver 31 operates the input/output device 140 of the storage 10 to input the desired food/drink. The control unit 100 of the storage 10 receives the specification of the desired food/drink of the receiver 31 from the input/output device 140.

For example, the receiver 31 operates the receiver terminal 30 to transmit the desired food/drink to the server 20. The control unit 100 of the storage 10 receives the specification of the desired food/drink of the receiver 31 from the server 20.

In step 12 (S12), the control unit 100 of the storage 10 determines whether the food/drink specified in S11 in the storage 10 has reached the eating timing. Specifically, the control unit 100 of the storage 10 determines whether the food/drink has reached the eating timing by referring to the information on the food/drink managed by the storage 10 or the server 20. If the food/drink has reached the eating timing, the process proceeds to step 13, and if the food/drink has not reached the eating timing, the process proceeds to step 1 of FIG. 6.

In step 13 (S13), the control unit 100 of the storage 10 conveys the food/drink to the outlet of the storage 10. Specifically, the control unit 100 of the storage 10 instructs the automatic conveyance device 130 to convey the food/drink to the outlet of the storage 10.

### <Specified date>

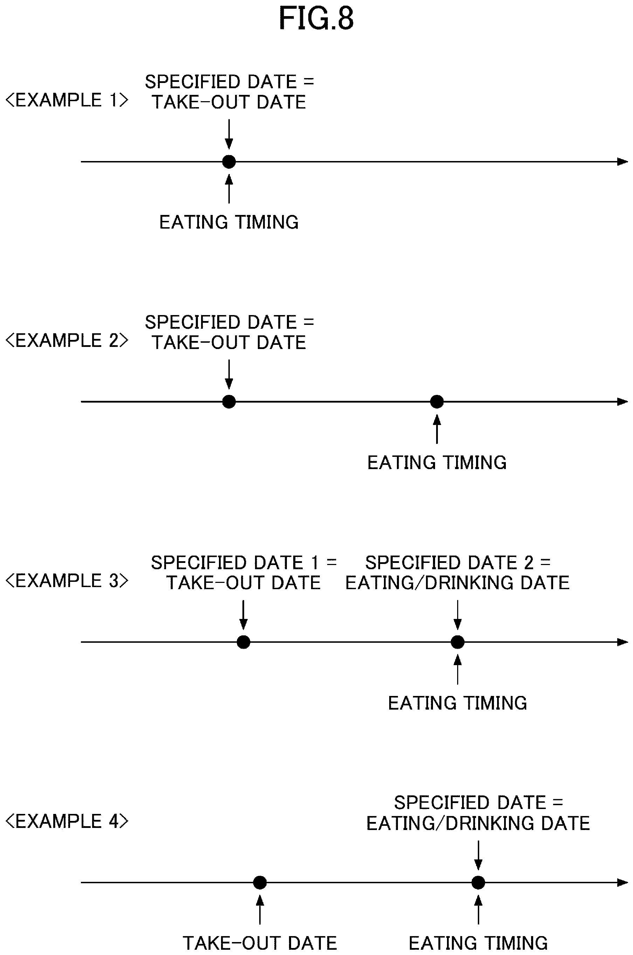

FIG. 8 is a diagram for explaining a specified date according to an embodiment of the present disclosure. Note that the specified date is not limited to a date and may include a time. That is, the receiver 31 may specify a desired date and time.

In example 1, the specified date specified by the receiver 31 is the date of taking out food/drink from the storage 10. The control unit 100 of the storage 10 determines a control target value of the storage environment of food/drink so that the food/drink reaches the eating timing on the day of being taken out. In this case, the receiver 31 can take out the food/drink that has reached the eating timing on the desired day and immediately eat/drink the food/drink that has reached the eating timing.

In example 2, the specified date specified by the receiver 31 is the day on which food/drink is taken out of the storage 10. The control unit 100 of the storage 10 determines a control target value of the storage environment of food/drink so that the food/drink reaches the eating timing a predetermined number of days after the take-out date. In this case, the receiver 31 can take out the food/drink on a desired day and eat/drink the food/drink that has reached the eating timing a predetermined number of days after the take-out date.

In example 3, the specified date specified by the receiver 31 is the day of taking out the food/drink from the storage 10 (specified date 1) and the day of eating/drinking the food/drink (specified date 2). That is, the receiver 31 can specify two days, a desired day of taking out the food/drink and a desired day of eating/drinking the food/drink. The control unit 100 of the storage 10 determines a control target value of the storage environment of the food/drink so that the food/drink reaches the eating timing on the day of eating/drinking the food/drink. In this case, the receiver 31 can take out the food/drink on the desired day and eat/drink the food/drink that has reached the eating timing on the desired day.

In example 4, the specified date specified by the receiver 31 is a day for eating/drinking the food/drink. The control unit 100 of the storage 10 specifies a day for taking out the food/drink from the storage 10 and determines a control target value of the storage environment of food/drink so that the food/drink reaches the eating timing on the day of eating/drinking the food/drink. In this case, the receiver 31 can take out the food/drink on the specified date from the eating timing adjustment system 1 and eat/drink the food/drink that has reached the eating timing on the desired day.

In the cases of examples 2, 3, and 4, the control unit 100 of the storage 10 (alternatively, the server 20) can present a storage method from the take-out date to the eating/drinking day. Specifically, the control unit 100 of the storage 10 can display the information of the storage method from the take-out date to the eating/drinking day on the input/output device 140 of the storage 10, or send the information to the receiver terminal 30.

### <Other embodiments>

For example, the eating timing adjustment system 1 can detect the type and amount of food/drink to adjust the temperature of the stored food/drink. For example, the eating timing adjustment system 1 databases the type (for example, by a photograph), the amount (for example, the weight), and the temperature of the food/drink.

For example, the receiver 31 can browse the management page on the input/output device 140 of the storage 10 to purchase and retrieve articles. In the management page corresponding to each storage 10, the articles in the storage 10 can be identified.

For example, the eating timing adjustment system 1 can report, to the receiver terminal 30, the information of the storage 10 (for example, the storage 10 that can be received) accessible from the current location of the receiver 31. The receiver 31 can select the desired storage 10.

For example, the storage 10 may allow multiple articles to be taken out at once when there are multiple articles to be received. For example, the storage 10 may organize articles into one package based on a shopping list. Further, the storage 10 may automatically adjust the height of the outlet so that the articles are easily taken out. When the receiver 31 sets a bag, the storage 10 can put the articles in the bag.

For example, the eating timing adjustment system 1 manages the usage date and time of the storage 10 by the receiver 31, and can report, to the family of the receiver 31, when the usage rate by the receiver 31 is decreasing. For example, authentication at the storage 10 can be performed by using a smartphone, or biometric authentication such as fingerprint authentication or face authentication in the event of a disaster. For example, the storage 10 can be equipped with a function of charging a smartphone and a function of storing valuables.

Although the embodiments have been described above, it will be understood that various changes in form and details can be made without departing from the purpose and scope of the claims.

The present international application is based upon and claims priority to Japanese Patent Application No. 2021-059426 filed on March 31, 2021, the entire contents of which are incorporated herein by reference.

### [Reference Signs List]

1 eating timing adjustment system
10 storage
20 server
30 receiver terminal
31 receiver
40 system administrator terminal
41 system administrator
50 storage entry person terminal
51 storage entry person
100 control unit
110 refrigeration device
120 air composition adjustment device
130 automatic conveyance apparatus
140 input/output device
150 sensor
160 adjustment area
161 warming chamber
162 thawing chamber
163 force-ripening storage
170 storage area
201 control unit (CPU)
202 ROM
203 RAM
204 auxiliary storage device
205 display device
206 operation device
207 I/F device
208 drive device
209 bus
210 storage medium
1001 console
1002 cargo compartment door
1003 shelf
1004 automatic conveyance device mast
1005 automatic conveyance device loader
1006 carrier box frame
1007 food carrier box

## Claims

1. A storage comprising:
a control unit; and
an actuator configured to adjust an environment based on an instruction from the control unit, wherein
the control unit
acquires information relating to food/drink in the storage and a specified date, and
gives the instruction to the actuator regarding a control target value of a storage environment of the food/drink, based on the information relating to the food/drink and the specified date.

2. The storage according to claim 1, wherein
the specified date is a take-out date of taking out the food/drink from the storage, and
the control unit determines the control target value of the storage environment of the food/drink such that the food/drink reaches an eating timing on the take-out date.

3. The storage according to claim 1, wherein
the specified date is a take-out date of taking out the food/drink from the storage, and
the control unit determines the control target value of the storage environment of the food/drink such that the food/drink reaches an eating timing a predetermined number of days after the take-out date.

4. The storage according to claim 1, wherein
the specified date is a take-out date of taking out the food/drink from the storage and an eating/drinking date of eating/drinking the food/drink, and
the control unit determines the control target value of the storage environment of the food/drink such that the food/drink reaches an eating timing on the eating/drinking date.

5. The storage according to claim 1, wherein
the specified date is an eating/drinking date of eating/drinking the food/drink, and
the control unit specifies a take-out date of taking out the food/drink from the storage, and determines the control target value of the storage environment of the food/drink such that the food/drink reaches an eating timing on the eating/drinking date.

6. The storage according to any one of claims 3 to 5, wherein the control unit presents a storage method of storing the food/drink from the take-out date to the eating/drinking date.

7. The storage according to any one of claims 1 to 6, wherein the control unit determines whether the specified food/drink in the storage has reached an eating timing.

8. The storage according to claim 7, wherein
the control unit
conveys the food/drink to an outlet of the storage when the food/drink has reached the eating timing, and
acquires the specified date when the food/drink has not reached the eating timing, and determines the control target value of the storage environment of the food/drink based on the food/drink and the specified date.

9. The storage according to any one of claims 1 to 8, wherein the storage is a mobile food/drink storage with an automatic convey device.

10. The storage according to any one of claims 1 to 9, wherein a condition of the storage environment is a condition relating to gas inside the storage.

11. The storage according to claim 10, wherein the gas inside the storage includes any one of ethylene, acetylene, or propylene.

12. The storage according to any one of claims 1 to 9, wherein a condition of the storage environment is a condition relating to temperature adjustment for any one of force-ripening the food/drink, thawing the food/drink, or warming the food/drink.

13. A method executed by a control unit of a storage, the storage including an actuator configured to adjust an environment based on an instruction from the control unit, the method comprising:
a step of acquiring information relating to food/drink in the storage and a specified date; and
a step of giving the instruction to the actuator regarding a control target value of a storage environment of the food/drink, based on the information relating to the food/drink and the specified date.

14. A server configured to control a storage including an actuator, wherein
a control unit of the server
acquires information relating to food/drink in the storage and a specified date, and
gives an instruction to the actuator regarding a control target value of a storage environment of the food/drink, based on the information relating to the food/drink and the specified date.
